(19) Europäisches Patentamt / European Patent Office / Office européen des brevets

(11) **EP 4 191 094 B1**

(12) **FASCICULE DE BREVET EUROPEEN**

(45) Date de publication et mention
de la délivrance du brevet:
**07.05.2025 Bulletin 2025/19**

(21) Numéro de dépôt: **22209679.4**

(22) Date de dépôt: **25.11.2022**

(51) Classification Internationale des Brevets (IPC):
**F16H 19/06** $^{(2006.01)}$ **F16H 25/20** $^{(2006.01)}$

(52) Classification Coopérative des Brevets (CPC):
**F16H 25/20; F16H 19/0622;** F16H 2025/204;
F16H 2025/2075

(54) **ACTIONNEUR A CABLE A SENSIBILITE EN EFFORT AMELIOREE**

KABELAKTUATOR MIT VERBESSERTER KRAFTEMPFINDLICHKEIT

CABLE ACTUATOR WITH IMPROVED FORCE SENSITIVITY

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **03.12.2021 FR 2112897**

(43) Date de publication de la demande:
**07.06.2023 Bulletin 2023/23**

(73) Titulaire: **Commissariat à l'Energie Atomique et
aux Energies
Alternatives
75015 Paris (FR)**

(72) Inventeurs:
• **GARREC, Philippe
91190 GIF-SUR-YVETTE (FR)**
• **VERNEY, Alexandre
73360 LES ECHELLES (FR)**

(74) Mandataire: **Cabinet Boettcher et al
5, rue de Vienne
75008 Paris (FR)**

(56) Documents cités:
**WO-A1-2019/029976 FR-A1- 3 089 359**

**Description**

DOMAINE DE L'INVENTION

L'invention concerne un actionneur à câble comportant un ensemble vis/écrou dont l'écrou est mobile en translation et attelé par un câble à un élément à déplacer et qui est pourvu d'un capteur d'effort. L'invention concerne plus particulièrement les actionneurs à câble dont le câble réalise une fonction d'anti-rotation de l'écrou par rapport à la vis.

ARRIERE PLAN DE L'INVENTION

Il est connu des actionneurs à câbles comportant une vis montée sur un châssis et un écrou coopérant avec la vis. L'écrou est associé à des moyens d'anti-rotation de sorte qu'une rotation relative de la vis et de l'écrou provoque un déplacement axial de l'écrou. Un ou plusieurs câbles associés à l'écrou sont reliés à une sortie de l'actionneur qui peut être rotative (lorsque les câbles sont reliés à des poulies) ou linéaire (lorsque les câbles sont reliés directement à la charge à manipuler).

Le document FR 3 089 359 décrit un tel actionneur à câble. Les capteurs d'effort pour de tels actionneurs sont généralement montés directement sur la sortie de l'actionneur et se révèlent encombrants, chers et/ou peu précis. En outre, ces capteurs d'effort étant directement accouplés aux segments du bras articulé, ils supportent des chocs et vibrations en provenance des segments et des charges qu'ils supportent. Pour éviter une trop grande fragilité, ils doivent donc être surdimensionnés ce qui augmente leur volume et diminue leur sensibilité. Ainsi, le pilotage en effort des actionneurs à câble, qui disposent de caractéristiques intéressantes notamment en termes de compacité, est malaisé ou couteux ce qui restreint leur diffusion.

OBJET DE L'INVENTION

L'invention a pour objet d'améliorer la précision et les coûts de fabrication et/ou de maintenance d'un actionneur à câble.

RESUME DE L'INVENTION

A cet effet, on prévoit, un actionneur à câble tel que décrit dans la revendication 1.

Selon l'invention, le capteur de distance est agencé de manière à ce que le fil effectue un changement de courbure en un premier point situé dans un premier plan orthogonal au premier axe, le plan étant situé à une première distance du premier point extrême comprise entre trente et soixante-dix pour cent de la course.

On obtient ainsi un actionneur pourvu d'un capteur simple qui réalise une mesure précise de la position angulaire de l'écrou. L'implantation du premier point améliore la sensibilité du capteur en réduisant la course maximale du capteur. Le rapport du déplacement utile du capteur sur son déplacement total est représentatif du rapport signal/bruit du capteur qui est alors, grâce à l'invention, amélioré.

Avantageusement, la première distance est comprise entre quarante pour cent et soixante pour cent de la course, préférentiellement cinquante pour cent.

Avantageusement, le premier point est situé à une deuxième distance non nulle d'une droite reliant le premier axe et le point de liaison.

Avantageusement, le changement de courbure du fil est réalisé par un tambour de l'enrouleur.

Il est possible d'adapter l'implantation du capteur en fonction d'autres exigences de conception lorsque le changement de courbure du fil est réalisé par un renvoi de fil, pouvant comprendre une poulie.

Préférentiellement, le capteur de distance comprend un enrouleur de fil à tambour, et le changement de courbure du fil est réalisé par le tambour de l'enrouleur. Le fil peut effectuer une pluralité de tours sur un tambour de l'enrouleur.

Alternativement, le capteur de distance à fil comprend un capteur de déplacement linéaire.

D'autres caractéristiques et avantages de l'invention ressortiront à la lecture de la description qui suit d'un mode de réalisation particulier et non limitatif de l'invention.

BREVE DESCRIPTION DES DESSINS

Il sera fait référence aux dessins annexés, parmi lesquels :

[Fig. 1] la figure 1 est une vue schématique en perspective partielle d'un vérin à câble;
[Fig. 2] la figure 2 est une vue schématique en perspective d'un premier mode de réalisation de l'invention ;
[Fig. 3] la figure 3 est une vue schématique en perspective d'un deuxième mode de réalisation de l'invention.

[Fig. 4] la figure 4 est une vue schématique en perspective de l'invention de la figure 3 dans une première configuration ;

[Fig. 5] la figure 5 est une vue schématique en perspective de l'invention de la figure 3 dans une deuxième configuration.

DESCRIPTION DETAILLEE DE L'INVENTION

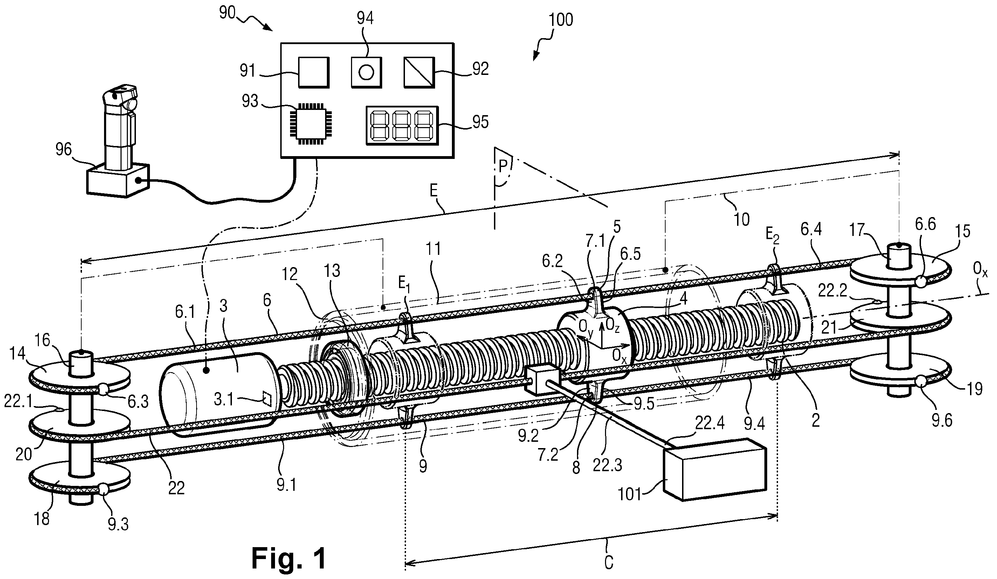

En référence à la figure 1, l'actionneur de l'invention, généralement désigné 100, comprend un châssis 10, ici une portion de cylindre 11 droit comprenant une base 12 au centre de laquelle un palier 13 accueille une vis 2 à rotation autour d'un premier axe Ox horizontal. La vis 2 est une vis à billes de pas $p_2$ qui est entraînée en rotation par un moteur électrique 3 comprenant un premier codeur rotatif 3.1. Un écrou 4 coopère avec la vis 2 et comprend un premier œillet 5 en saillie radiale de l'écrou 4. Un premier câble 6 s'étend parallèlement au premier axe Ox et comprend un premier tronçon 6.1 maintenu en sa première extrémité 6.2 dans le premier œillet 5 par une première sertissure 7.1. La deuxième extrémité 6.3 du premier tronçon 6.1 du premier câble 6 est sertie sur une première poulie 14 solidaire d'un premier arbre 16 monté à rotation sur le châssis 10 selon un axe perpendiculaire au premier axe Ox. Le premier câble 6 comprend également un deuxième tronçon 6.4 de premier câble 6 s'étendant parallèlement au premier axe Ox de part et d'autre d'un plan P orthogonal au premier axe Ox comprenant le premier œillet 5 et qui est maintenu en sa première extrémité 6.5 dans le premier œillet 5 par la première sertissure 7.1. La deuxième extrémité 6.6 du deuxième tronçon 6.4 du premier câble 6 est sertie sur une deuxième poulie 15 solidaire d'un deuxième arbre 17 monté à rotation sur le châssis 10 selon un axe perpendiculaire au premier axe Ox.

L'écrou 4 comprend un deuxième œillet 8 en saillie radiale de l'écrou 4 de manière à être diamétralement opposé au premier œillet 5. Un deuxième câble 9 s'étend parallèlement au premier axe Ox et comprend un premier tronçon 9.1 de deuxième câble 9 maintenu en sa première extrémité 9.2 dans le deuxième œillet 8 par une deuxième sertissure 7.2. La deuxième extrémité 9.3 du premier tronçon 9.1 du deuxième câble 9 est reliée à une troisième poulie 18 solidaire du premier arbre 16 monté à rotation sur le châssis 10 selon un axe perpendiculaire au premier axe Ox.

Le deuxième câble 9 comprend également un deuxième tronçon 9.4 s'étendant parallèlement au premier axe Ox de part et d'autre d'un plan P orthogonal au premier axe Ox comprenant le deuxième œillet 8 et qui est maintenu en sa première extrémité 9.5 dans le deuxième œillet 8 par la deuxième sertissure 7.2. La deuxième extrémité 9.6 du deuxième tronçon 9.4 du deuxième câble 9 est sertie sur une quatrième poulie 19 solidaire du deuxième arbre 17 monté à rotation sur le châssis 10 selon un axe perpendiculaire au premier axe Ox.

Les premier câble 6 et deuxième câble 9 sont chacun préchargés à une tension de précharge t6,9 égale à la moitié de la tension de précharge totale $t_0$, par exemple en agissant sur la distance séparant le premier arbre 16 et le deuxième arbre 17.

L'actionneur 100 comprend également une cinquième poulie 20 et une sixième poulie 21 respectivement solidaires en rotation du premier arbre 16 et du deuxième arbre 17. Un troisième câble 22 s'étend entre la cinquième poulie 20 et la sixième poulie 21 et comprend une première extrémité 22.1 sertie sur la cinquième poulie 20 et une deuxième extrémité 22.2 sertie sur la sixième poulie 21.

Un support 22.3 est serti sur le troisième câble 22 pour constituer une sortie 22.4 de l'actionneur 100 destinée à être reliée à une charge 101 à déplacer.

Le moteur 3 et son codeur 3.1 sont reliés à une unité de commande 90 de contrôle comprenant une unité 91 de détermination de la position de l'écrou 4, un comparateur 92, un calculateur 93, une mémoire 94 et un afficheur 95. Une poignée de commande 96 est également reliée à l'unité de commande 90.

Le premier câble 6 et le deuxième câble 9 étant tendus, ils exercent des efforts s'opposant à un entrainement en rotation de l'écrou 4 par la vis 2 lors d'une rotation du moteur 3 dans les deux sens de déplacement de l'écrou 4 relativement à la vis 2. Ils réalisent alors - en sus de leur fonction de transmission des efforts de déplacement depuis l'écrou 4 vers la charge 101 - une fonction d'anti-rotation de sorte qu'une rotation de la vis 2 sous l'action du moteur 3 provoque un déplacement de l'écrou 4 relativement à la vis 2 entre une première position extrême E1 et une deuxième position extrême E2 de l'écrou 4, représentées en pointillés sur la figure 1. La première position E1 et la deuxième position E2 sont séparées par une course C. L'actionneur à câble 100 de l'invention permet un déplacement de la charge 101 dans deux sens opposés.

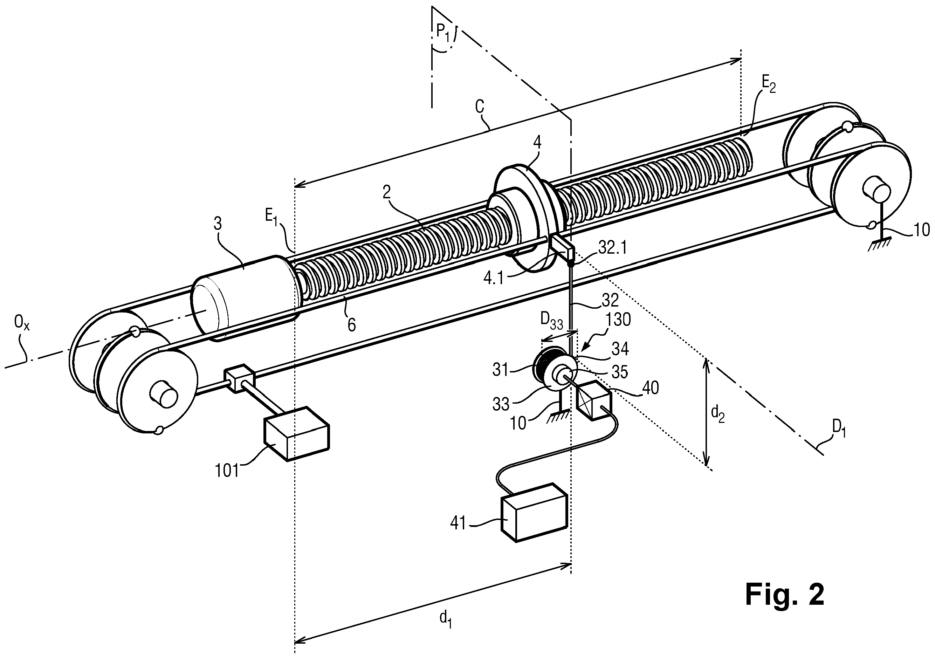

Selon un premier mode de réalisation de l'invention représenté en figure 2, un capteur de distance 30 à enrouleur 31 de fil 32 est solidaire du châssis 10. Le fil 32 comprend une première extrémité 32.1 de fil 32 reliée à l'écrou 4 en un point de liaison 4.1. Le fil 32 est engagé sur un tambour 33 de l'enrouleur 31 en un premier point 34 (point de tangence) et réalise plusieurs tours sur le tambour 33. Le tambour 33 possède un diamètre D33. Un ressort 35 en spirale exerce un effort de rappel sur le tambour 33 et maintient une tension permanente dans le fil 32. Un codeur rotatif 40 mesure la rotation du tambour 33. Le codeur rotatif 40 du capteur de distance 30 est relié à une unité de traitement 41, elle-même reliée à l'unité de commande 90. Le fil 32 effectue un changement de courbure en le premier point 34 lors de son enroulement sur le tambour 33.

Comme visible en figure 2, lorsque l'écrou 4 est à micourse, le point 34 est situé dans un plan P1 orthogonal au premier axe Ox et le plan P1 est situé à une première distance d1 du premier point extrême E1. Dans cette configuration, la distance d1 est égale à cinquante pour cent de la course C. Ainsi, le point 34 est, ici, situé dans un plan P1 médian de la course C de l'écrou 4. Le point 34 est également situé à une deuxième distance d2 non nulle d'une droite D1 qui relie le point de liaison 4.1 et l'axe Ox.

En fonctionnement, un utilisateur agit sur la poignée 96 pour commander un déplacement de la charge 101. L'unité 90 commande alors une rotation du moteur 3. Sous l'effet du moteur 3, la rotation de la vis 2 provoque une rotation identique de l'écrou 4 en raison des frottements de contact entre la vis 2 et l'écrou 4. Cette rotation met en tension le premier câble 6 et le deuxième câble 9 qui viennent alors exercer des efforts s'opposant à un entrainement en rotation de l'écrou 4 par la vis 2. Le premier câble 6 et le deuxième câble 9 réalisent alors - en sus de leur fonction de transmission des efforts de déplacement vers la charge 101 - une fonction d'anti-rotation de sorte qu'une rotation de la vis 2 sous l'action du moteur 3 provoque un déplacement de l'écrou 4 relativement à la vis 2.

Lorsque la charge 101 atteint la position souhaitée par l'utilisateur, celui-ci interrompt son action sur la commande 96. L'unité 91 détermine, au cours d'une première étape, une position théorique de l'écrou 4 sur la vis 2 basée sur le nombre de tours N du moteur mesuré par le codeur 3.1. L'unité 91 établit ainsi une position linéaire théorique de l'écrou 4 sur la vis 2 selon le premier axe Ox, mais également une position angulaire théorique de l'écrou 4 autour du premier axe Ox. La position théorique linéaire de l'écrou 4 sur la vis 2 correspond à la position selon le premier axe Ox qu'occuperait l'écrou 4 sur la vis 2 après un nombre de tours N hors charge, c'est-à-dire pour une masse nulle de la charge 101. La position angulaire théorique de l'écrou 4 autour de l'axe Ox correspond à la position autour de l'axe Ox qu'occuperait l'écrou 4 sur la vis 2 après un nombre de tours N hors charge, c'est-à-dire pour une masse nulle de la charge 101. Cette position angulaire théorique peut varier en fonction de la position linéaire théorique de l'écrou 4 sur la vis 2. Pour des commodités de description, nous considérerons que les positions angulaires et linéaires sont mesurées dans un repère orthonormé (Ox, Oy, Oz) lié à l'écrou 4.

La position effective de l'écrou 4 sur la vis 2 est déterminée par le nombre de rotations du tambour 33 enregistré par le codeur rotatif 40. L'unité de traitement 41 mesure la rotation $\alpha$ du codeur rotatif 40 et le transmet à l'unité de commande 90. Le comparateur 92 compare la position angulaire effective de l'écrou 4 autour de l'axe Ox avec la position angulaire théorique de l'écrou autour de l'axe Ox et, par soustraction, le comparateur 92 obtient une valeur $\delta_{ang4}$ de la déviation de la position angulaire de l'écrou 4.

Le calculateur 93 détermine alors un effort appliqué sur le support 22.3 par la charge 101 en fonction de la valeur $\delta_{ang4}$ de la déviation de la position angulaire de l'écrou 4.

Une telle détermination peut notamment se faire en résolvant l'équation 27 d'équilibrage de l'écrou suivante :

[Math 1]

$$C=\frac{2RE\rho^2\sin\alpha}{(d-\overline{p}\alpha)(E-d+\overline{p}\alpha)}\times\frac{\sqrt{2\rho^2(1-\cos\alpha)+(d-\overline{p}\alpha)^2}+\sqrt{2\rho^2(1-\cos\alpha)+(E-d+\overline{p}\alpha)^2}-E+2^{-1}\left(k_1^{-1}+k_2^{-1}\right)t_0}{k_1^{-1}\left(\frac{\rho^2\sin\alpha}{E-d+\overline{p}\alpha}+\overline{p}\right)\sqrt{\frac{2\rho^2(1-\cos\alpha)}{(d-\overline{p}\alpha)^2}+1}-k_2^{-1}\left(\frac{\rho^2\sin\alpha}{d-\overline{p}\alpha}-\overline{p}\right)\sqrt{\frac{2\rho^2(1-\cos\alpha)}{(E-d+\overline{p}\alpha)^2}+1}}$$

dans laquelle :

- C correspond au couple appliqué sur la première poulie 14,
- R correspond au rayon de la première poulie 14,
- E correspond à la distance qui sépare les points de tangence du premier câble 6 à la première poulie 14 et la deuxième poulie 15,
- $\alpha$ correspond à l'angle de rotation de l'écrou 4 par rapport au châssis 10,
- $\rho$ correspond au rayon d'ancrage du premier câble 6 par rapport à l'axe de l'écrou 4 (ou vis),
- d correspond à la distance du centre de l'écrou 4 au point de tangence du premier câble 6 sur la première poulie 14.

- $\overline{p}$ correspond au pas réduit du système vis 2 -écrou4 , c'est-à-dire p2/2$\pi$ ;

- $k_1$ correspond à la raideur du brin de premier câble 6 le plus court entre celui séparant l'écrou 4 de la première poulie 14 et celui séparant l'écrou 4 de la deuxième poulie 15 ;
- $k_2$ correspond à la raideur du brin de deuxième câble 9 le plus long entre celui séparant l'écrou 4 de la première poulie 14 et celui séparant l'écrou 4 de la deuxième poulie 15 ;
- $t_0$ correspond à la tension de précharge totale répartie sur les premier et deuxième câbles 6 et 9.

**EP 4 191 094 B1**

Les approximations amenant à cette équation ou en permettant sa résolution (développements limités par exemple) peuvent dépendre de la position linéaire de l'écrou 4 sur la vis 2.

On obtient ainsi un actionneur à câble 100 dont le capteur 30 permet une estimation des tensions dans le premier câble 6 et le deuxième câble 9 et ainsi d'en déduire un effort exercé sur la sortie 22.4 de l'actionneur 100. La position du point 34 sur le tambour 33 varie en fonction de la position de l'écrou 4 sur la vis 2. Ainsi, la position du plan P1, et donc la distance d1, varie lors du déplacement de l'écrou 4 sur la vis 2. Il est possible, en première approche, d'estimer que la distance d1 varie sur une plage d'amplitude sensiblement égale à la moitié du diamètre D33.

Les éléments identiques ou analogues à ceux précédemment décrits porteront une référence numérique identique dans la description qui suit des deuxième, troisième et quatrième modes de réalisation de l'invention.

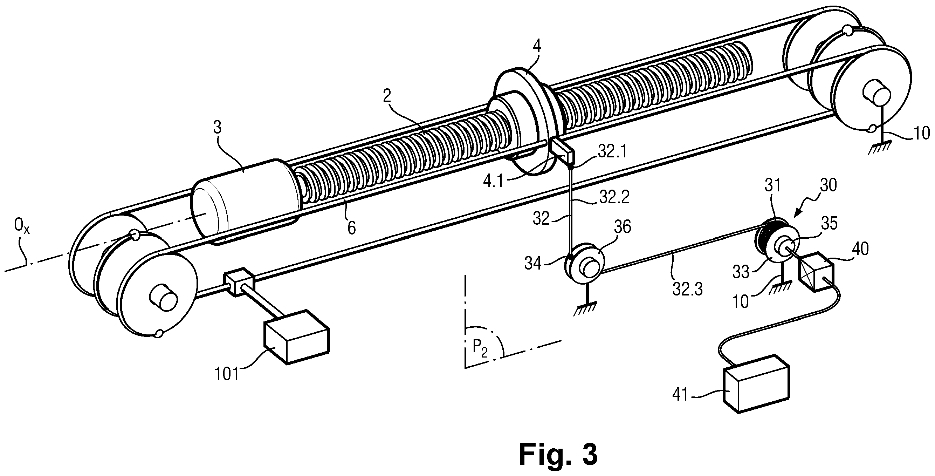

Selon un deuxième mode de réalisation représenté en figure 3, l'actionneur 100 comprend un renvoi de fil réalisé ici sous la forme d'une poulie 36 de renvoi. Le fil 32 s'étend depuis le point de liaison 4.1 jusqu'à la poulie 36 sur laquelle il s'engage en le point 34 de tangence du fil 32 sur la poulie 36. Le fil 32 effectue alors un changement de courbure en le point 34. En sortie de la poulie 36, le fil 32 s'étend, ici selon une direction sensiblement parallèle à l'axe Ox, jusqu'au tambour 33.

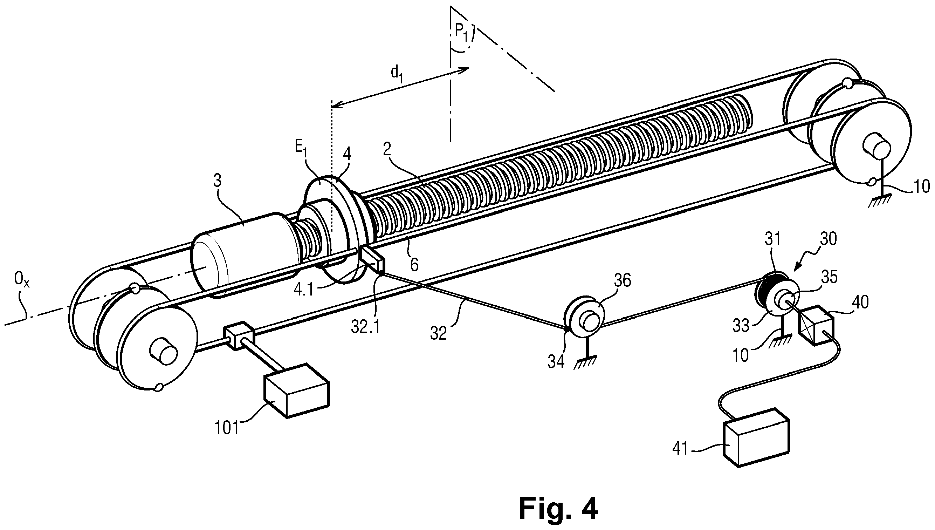

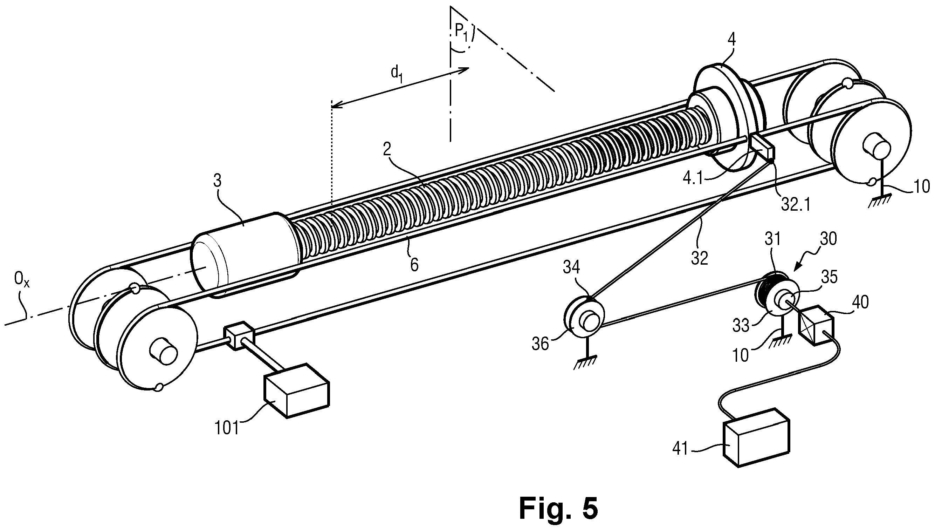

Comme visible en figures 4 et 5, la distance d1 qui sépare le plan P1 de la position extrême E1 varie avec la position de l'écrou 4 sur la vis 2 tout en demeurant comprise entre quarante pourcent (figure 4) et soixante pourcent (figure 5) de la course C.

En fonction des dimensions des différents composants de l'actionneur 100, le fil 32 peut comprendre une première portion 32.2 comprise entre les points 32.1 et 34, et une deuxième portion 32.3 comprise entre le point 31 et la poulie 36 qui présente un dévoiement par rapport à un deuxième plan P2 d'enroulement du fil 32 sur la poulie 36. Dans ce cas, la poulie 36 peut être montée par exemple dans une chape montée pivotante sur un axe de pivotement orthogonal à l'axe de rotation de la poulie 36 de façon à ce que le plan P2 passe constamment par les portions 32.2 et 32.3 du fil 32. Selon ce troisième mode de réalisation, l'axe de pivotement doit être parallèle et proche de la portion 32.3 et idéalement concentrique. Si l'axe de pivotement est monté sur roulement par exemple, une tension même faible dans le fil 32 sera suffisante pour maintenir automatiquement la poulie 36 dans le plan des deux portions 32.2 et 32.3.

Selon un quatrième mode de réalisation, le capteur de distance 30 à fil 32 peut comprendre un capteur linéaire à rappel auquel est relié une deuxième extrémité du fil 32.

Bien entendu, l'invention n'est pas limitée aux modes de réalisation décrits mais englobe toute variante entrant dans le champ de l'invention telle que définie par les revendications.

En particulier,

- bien qu'ici, le châssis soit de forme cylindrique, l'invention s'applique également à d'autres formes de châssis comme par exemple une platine, un tube carré, une forme quelconque ;
- bien qu'ici l'axe de rotation de la vis s'étende horizontalement, l'invention s'applique également à d'autres orientations de l'axe de rotation de la vis comme par exemple une orientation verticale, à quarante-cinq degrés ou quelconque ;
- bien qu'ici l'actionneur à câble comprenne deux câbles reliés à l'écrou, l'invention s'applique également à un actionneur dont l'écrou est relié à un unique câble ou à plus de deux câbles ;
- bien qu'ici la sortie de l'actionneur à câble soit reliée à un câble pour fournir un mouvement de translation, l'invention s'applique également à une sortie solidaire en rotation de l'un des arbres de l'actionneur pour fournir un mouvement de rotation ;
- bien qu'ici l'utilisateur agisse sur une poignée pour commander l'actionneur, l'invention s'applique également à d'autres moyens de commande comme par exemple un interrupteur ou une commande vocale ;
- bien qu'ici la détermination de l'effort exercé par l'actionneur ait été décrite lorsque l'actionneur est stabilisé dans une position donnée, l'invention s'applique également à une mesure dynamique de l'effort pendant le mouvement de l'actionneur ;
- bien qu'ici l'actionneur comprenne une vis à billes, l'invention s'applique également à d'autres types de vis comme par exemple une vis à filets simples, ou à rouleaux ;
- bien qu'ici le premier câble soit attelé à l'écrou par un sertissage à un œillet solidaire de l'écrou, l'invention s'applique également à d'autres moyens d'atteler un câble à l'écrou en un premier point de liaison du premier câble à l'écrou comme par exemple un anneau soudé à l'écrou, une sertissure dans un perçage réalisé dans l'écrou, des tours morts dans un perçage, une fixation à un support intermédiaire ;
- bien qu'ici les câbles s'étendent parallèlement au premier axe, l'invention s'applique également à d'autres configurations des câbles dans lesquelles le câble peut adopter une orientation quelconque par rapport au premier axe ;
- bien qu'ici les première et troisième poulies soient solidaire d'un même arbre, l'invention s'applique également à des poulies montées sur des arbres indépendants ;
- bien qu'ici l'ensemble des câbles de l'actionneur soient préchargés, l'invention s'applique également à un unique câble précharge, aucun câble précharge ou seulement une fraction des câbles préchargés ;
- bien qu'ici l'actionneur comprenne une poulie de renvois du fil, l'invention s'applique également à d'autres types de renvoi de fil comme par exemple un arbre monté à rotation, un œillet métallique ou synthétique, un arbre fixe en matière limitant la friction de type bronze ou PTFE ;

- bien qu'ici la vis soit montée dans un palier, l'invention s'applique également à d'autres moyens de montage à rotation de la vis sur le châssis comme par exemple une douille en bronze, un palier à aiguilles, à billes ou à rouleaux coniques.

**Revendications**

1.  Actionneur à câble (100) comprenant :

    - un châssis (10) ;
    - une vis (2) montée à rotation sur le châssis (10) et s'étendant selon un premier axe (Ox) ;
    - un écrou (4) coopérant avec la vis (2) ;
    - un premier câble (6) attelé à l'écrou (4) et fonctionnellement relié à une sortie (16, 17, 22.4) de l'actionneur (100) ;
    - un deuxième câble (9) attelé à l'écrou (4) et fonctionnellement relié à la sortie (22.4) de l'actionneur (100) ;
    - un moteur (3) agencé pour entrainer en rotation la vis (2) ;
    - le premier câble (6) étant agencé pour exercer des efforts s'opposant à un entraînement en rotation de l'écrou (4) par la vis (2) pour constituer des moyens d'anti-rotation de sorte qu'une rotation de la vis (2) sous l'action du moteur (3) provoque un déplacement de l'écrou (4) sur la vis (2) entre un première position extrême (E1) et une deuxième position extrême (E2) qui délimitent une course (C) de l'écrou (4),
    - l'actionneur à câble (100) comprenant également :
    - des moyens de déterminer (30) un déplacement angulaire de l'écrou (4) autour du premier axe (Ox) relativement au châssis (10),
     ; et
    - des moyens de déterminer (93) un effort appliqué sur la sortie (22.4) de l'actionneur à câble (100) en fonction du déplacement angulaire de l'écrou (4) autour du premier axe (Ox),

        dans lequel les moyens de déterminer (30) le déplacement angulaire de l'écrou (4) comprennent un capteur de distance (30) à fil (32) solidaire du châssis (10), une extrémité (32.1) du fil (32) étant reliée à l'écrou (4) en un point de liaison (4.1),
        **caractérisé en ce que**
        le capteur de distance (30) est agencé de manière à ce que le fil (32) effectue un changement de courbure en un premier point (34) situé dans un premier plan (P1) orthogonal au premier axe (Ox), le premier plan (P1) étant situé à une première distance (d1) de la première position extrême (E1) comprise entre trente et soixante-dix pour cent de la course (C).

2.  Actionneur à câble (100) selon la revendication 1, dans lequel la première distance (d1) est comprise entre quarante pour cent et soixante pourcent de la course (C), préférentiellement cinquante pour cent.

3.  Actionneur à câble (100) selon l'une quelconque des revendications précédentes, dans lequel le premier point (34) est situé à une deuxième distance (d2) non nulle d'une droite (D1) reliant le premier axe (Ox) et le point de liaison (4.1).

4.  Actionneur à câble (100) selon l'une quelconque des revendications 1 à 3, dans lequel le changement de courbure du fil (32) est réalisé par un renvoi (36) de fil (32).

5.  Actionneur à câble (100) selon la revendication 4, dans lequel le renvoi (36) de fil (32) comprend une poulie (36).

6.  Actionneur à câble (100) selon l'une quelconque des revendications 1 à 3, dans lequel le capteur de distance (30) comprend un enrouleur (31) de fil à tambour (33), et dans lequel le changement de courbure du fil (32) est réalisé par le tambour (33) de l'enrouleur (31).

7.  Actionneur à câble (100) selon la revendication 6, dans lequel le fil (32) effectue une pluralité de tours sur le tambour (33).

8.  Actionneur à câble (100) selon l'une quelconque des revendications précédentes, dans lequel le capteur de distance (30) à fil (32) comprend un capteur de déplacement linéaire.

**Patentansprüche**

1. Kabel-Aktuator (100) umfassend:

   - ein Gestell (10);
   - eine Spindel (2), die drehbar an dem Gestell (10) angebracht ist und sich entlang einer ersten Achse (Ox) erstreckt;
   - eine mit der Spindel (2) zusammenwirkende Mutter (4);
   - ein an die Mutter (4) gekoppeltes, erstes Kabel (6), das mit einem Ausgang (16, 17, 22.4) des Aktuators (100) in Wirkverbindung steht;
   - ein an die Mutter (4) gekoppeltes, zweites Kabel (9), das mit dem Ausgang (22.4) des Aktuators (100) in Wirkverbindung steht;
   - einen Motor (3), der dafür ausgelegt ist, die Spindel (2) in Rotation zu versetzen;
   - wobei das erste Kabel (6) dafür ausgelegt ist, Gegenkräfte auszuüben, welche verhindern, dass die Mutter durch die Spindel (2) in Drehung versetzt wird, und dadurch Drehsicherungsmittel bilden, so dass eine von dem Motor (3) verursachte Rotation der Schraube (2) eine Verschiebebewegung der Mutter (4) auf der Spindel (2) zwischen einer ersten Endposition (E1) und einer zweiten Endposition (E2) bewirkt, durch welche ein Verfahrweg (C) der Mutter (4) begrenzt wird;
   - wobei der Kabel-Aktuator (100) ferner umfasst:
   - Bestimmungsmittel (30) zur Bestimmung einer Winkelverschiebung der Mutter (4) um die erste Achse (Ox) relativ zu dem Gestell (10);
   und
   - Bestimmungsmittel (93) zur Bestimmung einer Kraft, die in Abhängigkeit von der Winkelverschiebung der Mutter (4) um die erste Achse (Ox) auf den Ausgang (22.4) des Kabel-Aktuators (100) aufgebracht wird;

   wobei die Bestimmungsmittel (30) zur Bestimmung einer Winkelverschiebung der Mutter (4) einen fest mit dem Gestell (10) verbundenen Abstandssensor (30) mit einem Draht (32) umfassen, wobei ein Ende (32.1) des Drahts (32) an einem Verbindungspunkt (4.1) mit der Mutter (4) verbunden ist, **dadurch gekennzeichnet, dass** der Abstandssensor (30) derart ausgelegt ist, dass der Draht (32) an einem ersten Punkt (34), welcher in einer ersten Ebene (P1) orthogonal zu der ersten Achse (Ox) liegt, eine Krümmungsänderung erfährt, wobei die erste Ebene (P1) in einem ersten Abstand (d1) von der ersten Endposition (E1) liegt, welcher zwischen dreißig und siebzig Prozent des Verfahrwegs (C) beträgt.

2. Kabel-Aktuator (100) nach Anspruch 1, wobei der erste Abstand (d1) zwischen vierzig Prozent und sechzig Prozent, vorzugsweise fünfzig Prozent, des Verfahrwegs (C) beträgt.

3. Kabel-Aktuator (100) nach einem der vorhergehenden Ansprüche, wobei sich der erste Punkt (34) in einem zweiten Abstand (d2) ungleich Null von einer Geraden (D1) befindet, welche die erste Achse (Ox) mit dem Verbindungspunkt (4.1) verbindet.

4. Kabel-Aktuator (100) nach einem der Ansprüche 1 bis 3, wobei die Krümmungsänderung des Drahts (32) durch eine Umlenkeinrichtung (36) zur Umlenkung des Drahts (32) erfolgt.

5. Kabel-Aktuator (100) nach Anspruch 4, wobei die Umlenkeinrichtung (36) zur Umlenkung des Drahts (32) eine Umlenkscheibe (36) umfasst.

6. Kabel-Aktuator (100) nach einem der Ansprüche 1 bis 3, wobei der Abstandssensor (30) einen Drahtaufwickler (31) mit einer Trommel (33) umfasst, und wobei die Krümmungsänderung des Drahts (32) durch die Trommel (33) des Aufwicklers (31) erfolgt.

7. Kabel-Aktuator (100) nach Anspruch 6, wobei der Draht (32) mehrfach um die Trommel (33) herumgewickelt wird.

8. Kabel-Aktuator (100) nach einem der vorhergehenden Ansprüche, wobei der Abstandssensor (30) mit einem Draht (32) einen linearen Wegsensor umfasst.

**Claims**

1. A cable actuator (100) comprising:

   · a frame (10);
   · a screw (2) rotatably mounted on the frame (10) and extending along a first axis (Ox);
   · a nut (4) cooperating with the screw (2);
   · a first cable (6) coupled to the nut (4) and functionally connected to an outlet (16, 17, 22.4) of the actuator (100);
   · a second cable (9) coupled to the nut (4) and functionally connected to the outlet (22.4) of the actuator (100); and
   · a motor (3) arranged to drive the screw (2) in rotation;

      the first cable (6) being arranged to exert forces that oppose the nut (4) being driven in rotation by the screw (2) so as to constitute anti-rotation means such that turning of the screw (2) under drive from the motor (3) causes the nut (4) to move along the screw (2) between a first extreme position ($E_1$) and a second extreme position ($E_2$) that define a stroke (C) for the nut (4); and
      the cable actuator (100) also comprising:

         · means (30) for estimating the angular movement of the nut (4) about the first axis (Lx) relative to the frame (10); and
         · means (93) for estimating the force being applied to the outlet (22.4) of the cable actuator (100) as a function of the angular movement of the nut (4) about the first axis (Ox);

      wherein the means (30) for estimating the angular movement of the nut (4) comprise a distance sensor (30) secured to the frame (10) and using a thread (32) to sense distance, one end (32.1) of the thread (32) being connected to the nut (4) at a connection point (4.1), **characterized in that** the distance sensor (30) is arranged in such a manner that the thread (32) changes curvature at a first point (34) situated in a first plane ($P_1$) orthogonal to the first axis (Ox), the first plane ($P_1$) being situated at a first distance ($d_1$) from the first extreme position ($E_1$) that lies in the range 30% to 70% of the stroke (C).

2. A cable actuator (100) according to claim 1, wherein the first distance ($d_1$) lies in the range 40% to 60% of the stroke (C), and is preferably 50%.

3. A cable actuator (100) according to either preceding claim, wherein the first point (34) is situated at a nonzero second distance ($d_2$) from a straight line ($D_1$) that connects the first axis (Ox) to the connection point (4.1).

4. A cable actuator (100) according to any one of claims 1 to 3, wherein the change of curvature of the thread (32) is obtained by a deflector (36) for deflecting the thread (32).

5. A cable actuator (100) according to claim 4, wherein the deflector (36) for deflecting the thread (32) comprises a pulley (36).

6. A cable actuator (100) according to any one of claims 1 to 3, wherein the distance sensor (30) comprises a winder (31) for winding thread on a drum (33), and wherein the change of curvature of the thread (32) is obtained by the drum (33) of the winder (31).

7. A cable actuator (100) according to claim 6, wherein the thread (32) occupies a plurality of turns around the drum (33).

8. A cable actuator (100) according to any preceding claim, wherein the distance sensor (30) using a thread (32) comprises a linear movement sensor.

Fig. 1

Fig. 2

**Fig. 3**

EP 4 191 094 B1

**Fig. 4**

EP 4 191 094 B1

Fig. 5

**EP 4 191 094 B1**

## RÉFÉRENCES CITÉES DANS LA DESCRIPTION

**Documents brevets cités dans la description**

- FR 3089359